# FASCICULE DE BREVET EUROPEEN

(11) **EP 1 427 632 B1**
(45) Date de publication et mention de la délivrance du brevet: **12.01.2005**
(21) Numéro de dépôt: 02796310.7
(22) Date de dépôt: 23.08.2002
(51) Int. Cl.: B64B 1/50, A63H 27/10

(54) **AEROSTAT CAPTIF ET EQUIPEMENT DE COMMANDE ASSOCIE**
FESSELBALLON UND ZUGEHÖRIGE STEUEREINRICHTUNG
CAPTIVE LIGHTER-THAN-AIR CRAFT AND THE ASSOCIATED CONTROL EQUIPMENT

(30) Priorité: 23.08.2001 FR 0111229
(43) Date de publication de la demande: 16.06.2004
(73) Titulaire: Jamet, David, 86470 Lavausseau (FR)
(72) Inventeur: Jamet, David, 86470 Lavausseau (FR)
(74) Mandataire: Thibon-Littaye, Annick
(86) Numéro de dépôt international: PCT/FR2002/002930
(87) Numéro de publication internationale: WO 2003/018400

(56) Documents cités:
- FR-A- 1 346 427
- FR-A- 2 761 456
- US-A- 1 436 241
- US-A- 3 292 304
- US-A- 4 729 750
- US-A- 4 799 914
- US-B1- 6 238 067

## Description

La présente invention concerne de manière générale. des aérostats captifs à basse altitude et leurs équipements de commande associés, applicables notamment à la mesure, à la prise de vue aérienne, à la publicité aérienne, et autres. Plus précisément, l'invention concerne des aérostats captifs avec des appareillages embarqués qui sont télécommandés depuis le sol.

II est connu du demandeur des aérostats captifs commandés depuis le sol par un opérateur. Ces aérostats sont reliés par une seule amarre à un dispositif de commande au sol. Un premier inconvénient de ces aérostats est que le dispositif de commande au sol ne peut pas être déplacé de manière aisée, ce qui limite considérablement les possibilités de l'opérateur pour les placer rapidement à une position voulue. Un autre inconvénient réside dans leur instabilité par rapport à la position voulue. Le problème de l'instabilité est moins accentué dans le cas des aérostats de type dirigeable, car ces aérostats du fait de leur forme s'orientent dans le sens du vent et acquièrent ainsi une certaine stabilité. Cette stabilité apportée par le vent est toutefois obtenue au détriment de la rapidité de manoeuvre.

Il est donc souhaitable de proposer des solutions aux inconvénients mentionnés ci-dessus, car les aérostats captifs présentent un grand intérêt pour des applications à basse altitude, par rapport à des techniques faisant appel à un avion, un hélicoptère ou un ULM. En effet, outre les avantages évidents de coût, de rapidité et de simplicité de mise en oeuvre, la technique des aérostats captifs minimisent les risques de survol pour les publics et les lieux survolés.

US-A-4 799 914 montre un système d'aérostat captif comprenant un aérostat et un équipement de commande situé au sol, ledit équipement étant porté par un opérateur et étant conçu ergonomiquement de telle manière que l'opérateur peut commander le système d'aérostat captif tout en se déplaçant.

La présente invention a pour but de fournir des systèmes d'aérostat captif dans lesquels l'opérateur peut déplacer aisément un équipement de commande au sol et placer ainsi l'aérostat captif à une position voulue. La présente invention a également pour but de fournir des systèmes d'aérostat captif dans lesquels une bonne stabilité de l'aérostat captif est obtenue.

Un système d'aérostat captif selon l'invention comprend un aérostat et un équipement de commande situé au sol, et des première et seconde amarres reliant l'aérostat à l'équipement de commande au sol, l'aérostat comprenant des premier et second moyens de stabilisation reliés en des premières extrémités à une nacelle de l'aérostat et couplés en des secondes extrémités aux première et seconde amarres pour stabiliser des mouvements de l'aérostat, et l'équipement de commande étant porté par un opérateur et étant conçu ergonomiquement de telle manière que l'opérateur peut commander le système d'aérostat captif tout en se déplaçant.

Selon une autre caractéristique, les premier et second moyens de stabilisation sont constitués par des tiges formant entre elles un angle compris entre 100 et 120 degrés environ.

Selon encore une autre caractéristique, un système d'aérostat captif selon l'invention comprend des moyens de commande à treuil motorisé logés dans l'équipement de commande pour commander une montée ou une descente de l'aérostat en augmentant ou en réduisant une longueur des première et seconde amarres.

De préférence, les moyens de commande à treuil motorisé comprennent des moyens de commande à vitesse variable pour commander à vitesse variable la montée ou la descente de l'aérostat. Plus précisément, les moyens de commande à treuil motorisé peuvent comprendre des premier et second treuils actionnés respectivement par des premier et second moteurs électriques, les premier et second treuils étant associés respectivement aux première et seconde amarres.

Selon une autre caractéristique, l'équipement de commande au sol comprend des premier et second moyens mécaniques articulés associés respectivement aux première et seconde amarres pour réduire par une ou des actions mécaniques exercées par l'opérateur une ou des longueurs relatives des première et seconde amarres afin d'induire un ou des déplacements de l'aérostat. Plus précisément, les premier et second moyens mécaniques articulés peuvent comprendre deux poignées indépendantes montées sur pivot à des extrémités avant de l'équipement de commande au sol et disposées ergonomiquement de telle manière qu'elles se trouvent à portée naturelle des mains de l'opérateur et peuvent être basculées en rotation indépendamment par celui-ci afin de réduire la ou les longueurs relatives des première et seconde amarres de façon à induire le ou les déplacements de l'aérostat.

De plus, l'aérostat peut également comprendre des moyens de stabilisation de charge pour stabiliser sur un axe vertical une charge embarquée dans l'aérostat en amortissant des mouvements et oscillations appliqués à la charge. De préférence, les moyens de stabilisation de charge comprennent trois amortisseurs montés en étoile sur deux axes verticaux couplés par cardan et portant la charge en une extrémité inférieure.

Selon encore une autre caractéristique, l'aérostat comprend des moyens télécommandés depuis le sol par l'opérateur pour commander des rotations de la charge autour de différents axes, et notamment autour d'un axe vertical et d'un axe horizontal. De plus, il peut également être fourni des moyens de communication bidirectionnelle pour permettre des échanges d'informations entre l'équipement de commande au sol et l'aérostat, et notamment des informations de télécommande et/ou des informations vidéo.

L'équipement de commande au sol peut comprendre des moyens de visualisation d'informations, incluant notamment un écran, pour visualiser des informations envoyées par l'aérostat et/ou pour visualiser des informations relatives au fonctionnement du système d'aérostat captif.

Par ailleurs, l'aérostat peut comprendre des moyens destinés à la mesure et/ou à la prise de vue et/ou à la publicité et/ou aux secours et/ou à la signalisation. De préférence, les moyens destinés à la prise de vue comprennent un appareil photographique et une caméra vidéo miniature montée dans la visée de l'appareil photographique.

Un aérostat de type ballon sphérique est particulièrement bien adapté pour un système d'aérostat captif selon l'invention. Toutefois, un aérostat de type dirigeable est également adapté.

D'autres caractéristiques et avantages de l'invention apparaîtront à la lecture de la description suivante de plusieurs formes de réalisation préférées des systèmes d'aérostat captif selon l'invention. Cette description est faite en référence aux dessins qu'elle comporte, dans lesquels:
- la figure 1 est une vue d'ensemble montrant sous forme simplifiée une forme de réalisation préférée d'un système d'aérostat captif selon l'invention;
- la figure 2 est une vue de dessus, habillages retirés, d'une console de commande incluse dans la forme de réalisation préférée de la figure 1;
- la figure 3 est une vue en coupe de la console de commande de la figure 2;
- la figure 4 est une vue de dessus d'une platine de..nacelle incluse dans un aérostat de la forme de réalisation préférée de la figure 1;
- la figure 5 est une vue en perspective d'un assemblage de la platine de nacelle à l'enveloppe de l'aérostat;
- la figure 6 montre une section d'appareillage portée par un aérostat de la forme de réalisation préférée de la figure 1;
- la figure 7 est une vue de dessus d'un dispositif mécanique de transmission et de stabilisation pour la section d'appareillage; et
- la figure 8 montre en détail le montage d'un amortisseur parmi trois inclus dans le dispositif mécanique de transmission et de stabilisation.

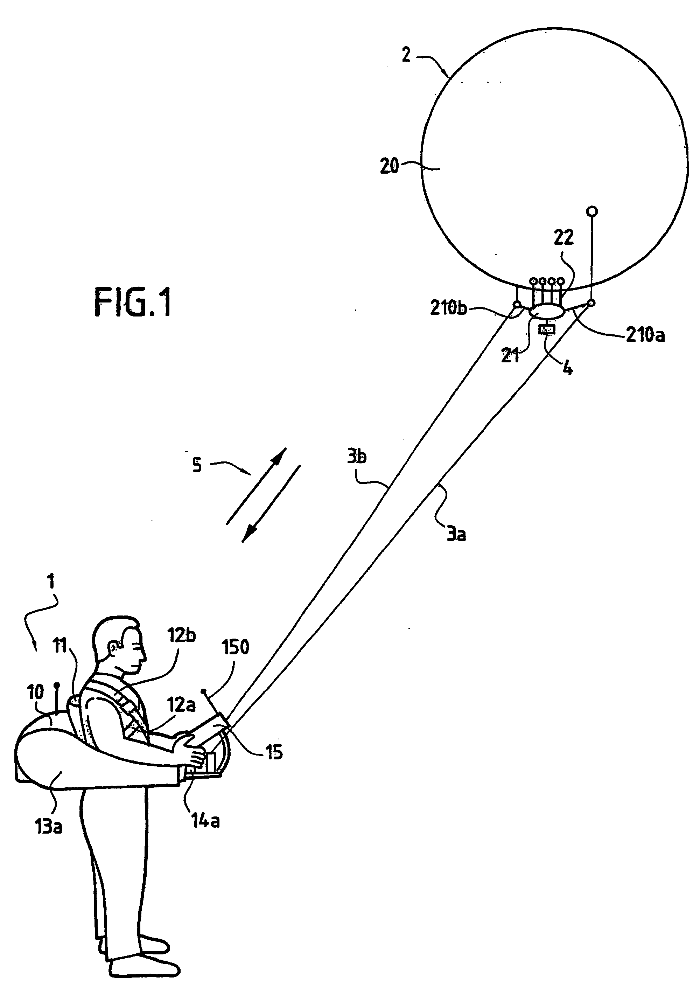

En référence à la figure 1, un système d'aérostat captif selon une forme de réalisation préférée de l'invention comprend principalement une console de commande 1, un aérostat 2 et deux amarres 3a et 3b reliant la console 1 à l'aérostat 2.

La console de commande 1 est portée par un opérateur. La console 1 est de type dorsale et est conçue de manière ergonomique. L'essentiel de la charge de la console 1 est localisée au niveau d'un coffre arrière 10 et est portée par le dos de l'opérateur. Un dossier 11 est en contact avec le dos de l'opérateur afin d'améliorer sont confort et de réduire sa fatigue. Des bretelles de portage 12a et 12b sont prévues pour passer sur les épaules de l'opérateur et fixer de manière sûre la console 1 sur l'opérateur. Cette conception permet de libérer les mains de l'opérateur lors des déplacements. Deux ailes latérales 13a et 13b de la console 1 sont situées sur les flancs de l'opérateur, au niveau de sa taille, et forment des accoudoirs sur lesquels celui-ci repose ses avant-bras. Deux poignées de commande articulées 14a et 14b sont disposées au niveau d'extrémités avant des ailes latérales 13a et 13b et sont à la portée des mains de l'opérateur. Un tableau de bord 15 est également disposé à l'avant de la console 1 et fournit à l'opérateur toutes les informations utiles à la mise en oeuvre du système d'aérostat captif selon l'invention. Un écran anti-lumière 150 est éventuellement installé pour améliorer la lisibilité du tableau de bord 15. Ainsi équipé de la console 1, l'opérateur peut se déplacer sans difficulté, à sa guise, sur des distances courtes ou longues, afin d'amener l'aérostat 2 à l'emplacement voulu.

Dans cette forme de réalisation préférée, l'aérostat 2 est de type ballon sphérique. Selon d'autres formes de réalisation non décrites ici, l'aérostat est de type dirigeable. Comme montré de manière simplifiée à la figure 1, l'aérostat 2 comprend un ballon sphérique 20, et une nacelle constituée principalement d'une platine de nacelle 21 équipée de tiges de stabilisation 210a et 210b, et de tiges de fixation 22.

Le ballon 20 est gonflé à l'hélium et peut être un modèle fabriqué par la société canadienne Mobil Airship. Le diamètre et le volume du ballon 20 peuvent varier en fonction de l'utilisation et de la charge à soulever. Selon une forme de réalisation préférée, pour une utilisation standard, le ballon 20 a un diamètre de 2,2 m environ, un volume voisin de 5,5 m³ et une capacité de levage d'environ 4,5 kg.

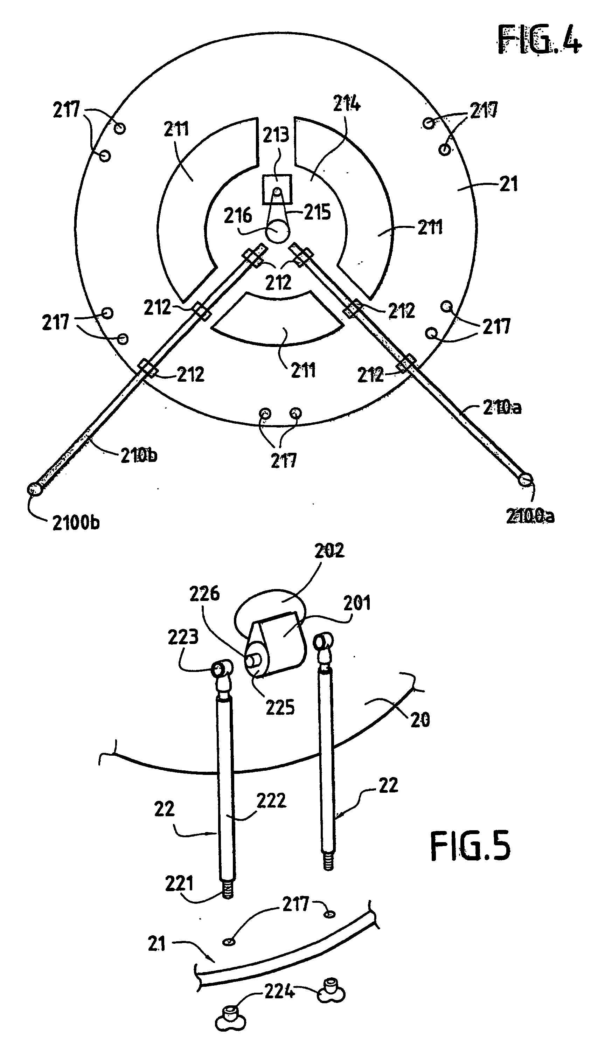

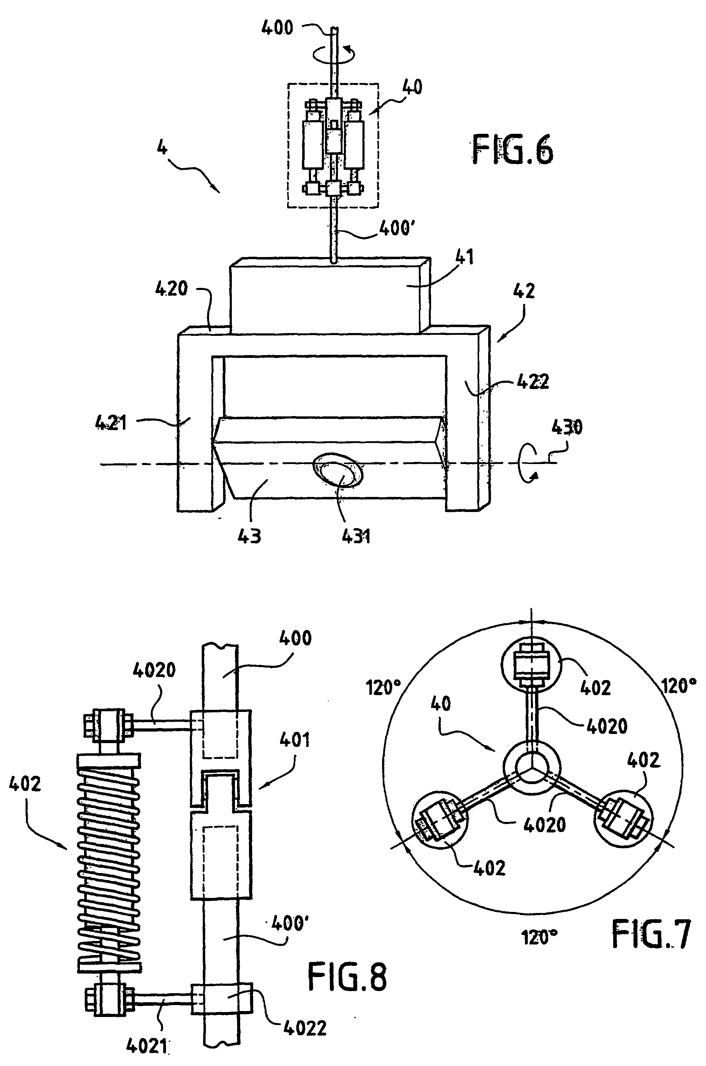

La platine de nacelle 21 remplit deux fonctions importantes pour le fonctionnement du système d'aérostat captif selon l'invention, à savoir, une fonction de stabilisation du ballon et une fonction de fixation d'une section d'appareillage 4 située sous la nacelle. La fonction de stabilisation du ballon est assurée avec le concours des deux tiges de stabilisation 210a et 210b. Comme montré à la figure 4, les tiges de stabilisation 210a et 210b sont disposées en V et sont fixées sur une face supérieure de la platine de nacelle 21. Un anneau 2100a, 2100b, est monté sur chaque tige de stabilisation 210a, 210b, à une extrémité du tube éloignée de la platine 21. Les amarres 3a et 3b, montrées à la figure 1, sont passées respectivement dans les anneaux 2100a et 2100b et sont ensuite fixées à l'enveloppe du ballon 20 à l'aide de mousquetons (non représentés) qui se ferment sur des boucles (non représentées) collées directement sur le tiers inférieur de l'enveloppe et situées dans l'alignement vertical des anneaux. La fonction de fixation de la section d'appareillage 4 sera décrite plus précisément par la suite en référence aux figures 4 et 6.

Les tiges de fixation 22 ont pour fonction de fixer la platine de nacelle 21 à l'enveloppe du ballon 20. Les tiges de fixation 22 et leur assemblage à la platine 21 et à l'enveloppe du ballon 20 sont décrits en détail par la suite en référence à la figure 5.

Les amarres 3a et 3b maintiennent captif l'aérostat 2. Les amarres 3a et 3b sont réalisées, par exemple, avec une corde Nylon (marque déposée) de 3 à 4 mm de diamètre. La longueur des amarres 3a et 3b entre la console 1 et l'aérostat 2 est commandée par l'opérateur à l'aide de deux treuils inclus dans la console 1. Dans la présente invention, la combinaison des deux amarres 3a et 3b et des tiges de stabilisation 210a et 210b autorise une excellente stabilisation et facilite le pilotage de l'aérostat 2.

Une communication bidirectionnelle par faisceaux hertziens 5 est établie entre la console 1 et l'aérostat 2. Des dispositifs électroniques adéquats d'émission et de réception sont installés dans la console 1 et l'aérostat 2. Ces dispositifs d'émission et de réception sont bien connus des hommes du métier et ne seront pas décrits ici.

Dans le sens console-vers-aérostat, la communication bidirectionnelle 5 autorise une transmission de signaux de télécommande. Ces signaux de télécommande permettent à l'opérateur, par exemple, de télécommander des rotations de la section d'appareillage 4, de télécommander un déclenchement d'une mesure, de télécommander une coupure d'alimentation de servomoteurs embarqués dans l'aérostat 2, et autres analogues. Comme cela apparaîtra plus clairement par la suite en référence à la description des figures 4 et 6, dans cette forme réalisation, des rotations de la section d'appareillage 4 sont télécommandées selon deux axes, de façon à avoir un débattement horizontal de 360 degrés et un débattement vertical de 90 degrés. Selon une variante, aisément réalisable par les hommes du métier compte-tenu des enseignements apportés dans la présente demande, des moyens connus supplémentaires sont ajoutés à la présente forme de réalisation afin d'autoriser des rotations de la section d'appareillage 4 selon un troisième axe. Dans des applications à la publicité des systèmes d'aérostat captif selon l'invention, outre les logos et messages publicitaires présents sur l'enveloppe du ballon, il est possible d'embarquer des moyens d'animation télécommandés afin d'attirer davantage l'attention des personnes.

Dans le sens "aérostat-vers-console", la communication bidirectionnelle 5 autorise, par exemple, la transmission de résultats de mesure, d'une indication indiquant l'état de charge d'accumulateurs embarqués pour l'alimentation électrique, d'une information de position de l'aérostat 2 fournie par exemple par un boîtier GPS embarqué, d'une information d'altitude, d'un signal vidéo fourni par une caméra embarquée, et autres analogues.

La transmission d'informations de position et d'altitude de l'aérostat 2 vers la console 1 est prévue, par exemple, dans le cas d'une forme de réalisation du système d'aérostat captif selon l'invention plus particulièrement destinée à la mesure (mesure de la pollution de l'air autour d'un site polluant, mesure en champ proche, in situ, d'un diagramme de rayonnement électromagnétique d'une antenne, etc.).

La transmission d'un signal vidéo de l'aérostat 2 vers la console 1 est prévue, par exemple, dans le cas d'une forme de réalisation du dispositif selon l'invention destinée plus particulièrement à la prise de vue aérienne. Une caméra vidéo miniature est alors montée dans la visée d'un appareil photographique embarqué et le signal vidéo produit est transmis (par exemple, avec un émetteur vidéo à 2,4 GHz) à destination de la console 1. L'image vue par la caméra est affichée sur un écran à cristaux liquides (LCD) inclus dans le tableau de bord 15 de la console 1. L'opérateur peut ainsi choisir la vue qui lui convient avant de déclencher l'appareil photographique.

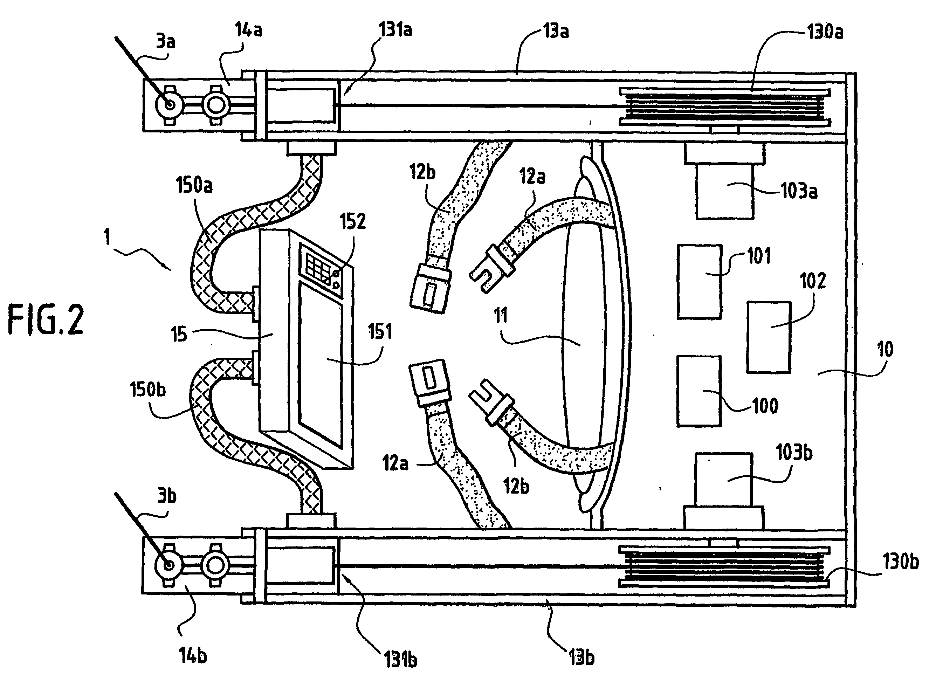

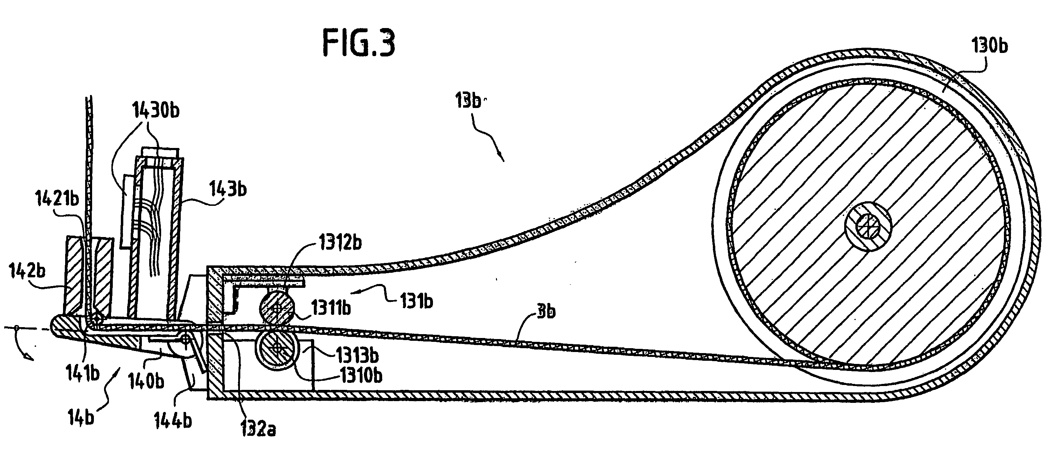

En référence aux figures 2 et 3, il est maintenant décrit de manière détaillée la console de commande 1 du système d'aérostat captif selon l'invention.

Comme montré à la figure 2 en vue de dessus, avec les habillages retirés, la console 1 comprend principalement le coffre arrière 10, le dossier arrière 11 et les bretelles 12a et 12b, les ailes latérales 13a et 13b, les poignées de commande articulées 14a et 14b, et le tableau de bord 15.

Le coffre arrière 10 contient principalement des circuits de commande et de puissance 100, des circuits d'émission/réception de faisceaux hertziens 101, une source d'alimentation 102 et deux motoréducteurs 103a et 103b. Les circuits 100 et 101 sont connus des hommes du métier et ne seront pas détaillés ici. La source d'alimentation 102 est constituée d'un ou de plusieurs accumulateurs électriques et de circuits de conversion de tension adéquats. Les motoréducteurs 103a et 103b sont commandés à vitesse variable. Des circuits de variation de vitesse, de commutation de sens de rotation, et d'attaque en puissance des motoréducteurs sont inclus dans les circuits 100.

Deux bobines de treuil 130a et 130b sont montées sur les axes des motoréducteurs 103a et 103b, et sont logées dans les ailes latérales 13a et 13b, respectivement. Selon une forme de réalisation préférée, les bobines de treuil 130a et 130b peuvent contenir chacune une réserve de corde d'amarre de 200 m environ, avec un diamètre de corde de 3 à 4 mm.

Comme montré aux figures 2 et 3, des dispositifs de guidage horizontal d'amarre 131a et 131b sont inclus dans les extrémités avant des ailes latérales 13a et 13b, respectivement. Les amarres 3a et 3b courent à l'intérieur des ailes latérales 13a et 13b en provenance des bobines 130a et 130b et traversent les dispositifs de guidage horizontal d'amarre 131a et 131b avant de sortir des ailes latérales 13a et 13b, respectivement. Les dispositifs de guidage horizontal d'amarre 131a et 131b guident les amarres 13a et 13b vers des orifices de sortie 132a et 132b, montrés à la figure 3, situés dans les extrémités avant des ailes latérales 13a et 13b, respectivement. Les dispositifs de guidage horizontal d'amarre 131a et 131 b sont analogues. Seul le dispositif de guidage d'amarre horizontal 131 b est montré en détail à la figure 3. Le dispositif 131 b comprend une roue à rainure 1310b, un galet de freinage 1311 b, et des supports de montage 1312b et 1313b. Le support de montage 1313b est fixé sur le bâti de la console 1 et supporte en rotation la roue à rainure 1310b. Le support de montage 1312b est fixé sur le bâti de la console 1 et supporte en rotation le galet de freinage 1311 b. L'amarre 3b est engagée dans la rainure de la roue 131 0b et est pressée au fond de celle-ci par le galet de freinage 1311 b. L'amarre 3b est ainsi maintenue de manière fiable dans la rainure de la roue 1310b et son défilement est freiné par le galet 1311 b. Le galet 1311b est réalisé par exemple en matériau PVC ou caoutchouc.

Les poignées de commande articulées 14a et 14b sont montées sur les extrémités avant des ailes latérales 13a et 13b, au niveau des orifices de sortie 132a et 132b, respectivement. Les poignées 14a et 14b ont des structures analogues.

La poignée 14b est montrée en détail à la figure 3 et comprend principalement une base 140b, une poulie de renvoi 141b, un guide vertical d'amarre 142b, et un manchon 143b. La poulie de renvoi 141 b est montée sur la base 140b afin d'effectuer un renvoi vertical de l'amarre 3b vers un alésage de guidage 1421b du guide vertical d'amarre 142b. Le guide vertical d'amarre 142b est monté sur une partie supérieure de la base 140b, au-dessus de la poulie de renvoi 141b, de telle manière qu'une ouverture inférieure de l'alésage de guidage 1421 b est située face à la poulie de renvoi 141b. Le manchon 143b est monté également sur la partie supérieure de la base 140b et est conçu pour être saisi par la main de l'opérateur. La base 140b est montée sur pivot sur l'extrémité avant de l'aile latérale 13b et un ressort 144b est prévu pour ramener la base 140b vers un niveau de butée horizontal.

Le montage sur pivot et ressort des poignées de commande articulées 14a et 14b permet un débattement vertical des poignées vers le bas. Ce débattement vers le bas de la poignée de commande 14a, 14b permet de réduire la longueur relative de l'amarre 3a, 3b qui lui est associée, et ainsi, d'exercer une action mécanique pour modifier la position de l'aérostat 2, par un effet de rotation autour de son axe vertical. Selon une forme de réalisation préférée, le débattement vers le bas des poignées est de 15 cm.

Les manchons 143a et 143b sont équipés d'éléments de commande et de réglage 1430a et 1430b, tels que des interrupteurs, des touches, et des potentiomètres, selon les formes de réalisation, afin notamment de transmettre des informations de commande et de réglage aux circuits de commande et de puissance 100 situés dans le coffre arrière 10 du système d'aérostat captif selon l'invention. Ces informations de commande et de réglage incluent notamment une information de montée/descente de l'aérostat 2, une information de vitesse de montée/descente, une information de déclenchement d'une action, telle qu'une prise de mesure ou de vue, et autres analogues. Le manchon 143a, 143b est constitué d'un corps creux à l'intérieur duquel passent différents fils de connexion. Pour des raisons de simplification et de clarté des dessins, l'acheminement des différents fils de connexion et leurs passages à travers les éléments constitutifs de la console 1 ne sont pas représentés.

Comme cela apparaîtra clairement à la figure 2, le tableau de bord 15 est relié aux ailes latérales 13a et 13b, au moyen de tubes flexibles 150a et 150b. Ce montage autorise une orientation aisée du tableau de bord 15 et participe à l'ergonomie de l'ensemble. Les fils de connexion du tableau de bord passent à l'intérieur des tubes flexibles 150a et 150b. Dans cette forme de réalisation préférée, le tableau de bord 15 comprend un écran LCD 151 et une platine de signalisation et de commande 152. Le tableau de bord 15 concentre toutes les informations utiles au fonctionnement du système d'aérostat captif selon l'invention. Ces informations sont affichées sur l'écran 151 ou indiquées par des voyants de la platine de signalisation et de commande 152. Un voyant est par exemple disposé dans la platine 152 pour indiquer à l'opérateur l'autonomie restante (état de charge des accumulateurs) du système. La platine 152 peut comprendre également des éléments de commande et de réglage, tels que des interrupteurs, des touches, et des potentiomètres, en complément de ceux prévus sur les manchons 143a et 143b des poignées de commande articulées 14a et 14b.

En référence aux figures 4 à 8, il est maintenant décrit plus particulièrement l'aérostat 2.

Comme montré à la figure 4, la platine de nacelle 21 est un disque comprenant 3 parties ajourées 211 afin d'en réduire le poids. Selon une forme de réalisation préférée, la platine de nacelle 21 est fabriquée en matériau composite, par exemple, carbone et/ou kevlar (marque déposée). Les tiges de stabilisation 210a et 210b sont fixées sur la face supérieure de la platine de nacelle 21, sur des portions pleines en rayon de celle-ci, à l'aide de cavaliers de fixation 212. Des premières extrémités des tiges de stabilisation 210a et 210b sont situées à proximité du centre de la platine 21. Les secondes extrémités des tiges de stabilisation 210a et 210b comportent les anneaux 2100a et 2100b à travers lesquels sont passées les amarres 3a et 3b, respectivement. Les tiges de stabilisation 210a et 210b forment un V et sont écartés d'un angle compris entre 100 et 120 degrés. Un servomoteur 213 est également installé sur la face supérieure de la platine de nacelle 21, sur une portion pleine centrale 214 de celle-ci. Une courroie ou chaîne de transmission 215 relie un pignon du servomoteur 213 à une roue de transmission 216 solidaire d'une tige d'axe 400 montrée à la figure 6. La tige d'axe 400 est située suivant l'axe vertical traversant le centre de la platine 21. La tige d'axe 400 porte la charge constituée par la section d'appareillage 4. Lorsque le servomoteur 213 est alimenté, la tige d'axe 400 effectue une rotation autour de l'axe vertical et entraîne avec elle la section d'appareillage 4. L'actionnement du servomoteur 213 est télécommandé depuis le sol par l'opérateur.

Comme montré également à la figure 4, la platine de nacelle 21 comprend plusieurs orifices traversants 217 regroupés par paires. Les paires des orifices traversants 217 sont réparties régulièrement sur un pourtour intérieur de la platine de nacelle 21. Les orifices 217 sont utilisés pour assembler les tiges de fixation 22 à la platine de nacelle 21.

L'assemblage des tiges de fixation 22 à la platine de nacelle 21 et au ballon 20 est montré à la figure 5.

Selon la forme de réalisation représentée, une tige de fixation 22 comprend une tige filetée 221 et un tube formant entretoise 222. La tige filetée 221 est insérée dans le tube 222. Une première extrémité de la tige filetée 221 est insérée dans un orifice 217 correspondant de la platine de nacelle 21 et un écrou oreille 224 est vissé sur cette première extrémité, de telle manière que la platine de nacelle 21 est prise en sandwich entre le tube 222 et l'écrou oreille 224. Une seconde extrémité de la tige filetée 221 est vissée dans une chape de rotule 223 jusqu'à immobilisation du tube 222 entre la face supérieure de la platine de nacelle 21 et la chape de rotule 223. La paire constituée par deux tiges de fixation 22 est ensuite assemblée, par les chapes de rotule 223, à un cylindre d'assemblage à rotules 225. Le cylindre 225 est préalablement inséré dans une boucle 201 fixée à l'enveloppe du ballon 20 à l'aide d'une pièce rapportée 202. La fixation de la boucle 201 et de la pièce rapportée 202 à l'enveloppe est réalisée par exemple à l'aide d'un adhésif. Les deux chapes de rotule 223 de la paire de tiges de fixation 22 sont ensuite insérées dans deux rotules 226 situées au centre de deux faces opposées, planes et circulaires, du cylindre 225.

Selon une forme de réalisation préférée, le matériau composite carbone est utilisé pour les tiges de stabilisation 210 et les tiges de fixation 22. Les boucles 201 sont réalisées en Nylon (marque déposée). Le PVC ou le caoutchouc est utilisé pour les cylindres d'assemblage à rotules 225.

En référence aux figures 6 à 8, il est maintenant décrit plus particulièrement la section d'appareillage 4.

Comme montré à la figure 6, la section d'appareillage 4 comprend principalement un dispositif mécanique de transmission et de stabilisation 40, un boîtier électronique 41, un cadre en U 42, et un boîtier de capteur 43.

Le dispositif mécanique de transmission et de stabilisation 40 est montré en détail aux figures 7 et 8. Le dispositif mécanique, de transmission et de stabilisation 40 a pour fonction, d'une part, de transmettre à la section d'appareillage 4 le mouvement de rotation autour de l'axe vertical commandé par le servomoteur 213 et, d'autre part, d'assurer la stabilité de la section d'appareillage en amortissant tout mouvement ou oscillation de lacet et de tangage en provenance de la platine de nacelle 21. Le dispositif mécanique de transmission et de stabilisation 40 comprend principalement la tige d'axe 400, une tige d'axe 400', un cardan de transmission 401, 3 amortisseurs 402, et différentes pièces de montage.

La tige d'axe 400 est reliée à la roue de transmission 216 et est entraînée en rotation par celle-ci. La tige d'axe 400 est couplée à la tige d'axe 400' par l'intermédiaire du cardan de transmission 401. Une extrémité inférieure de la tige d'axe 400' est reliée de manière fixe à une partie supérieure du boîtier électronique 41 et entraîne en rotation, avec l'actionnement du servomoteur 213, l'ensemble constitué du boîtier électronique 41, du cadre en U 42, et du boîtier de capteur 43.

Comme montré aux figures 7 et 8, les 3 amortisseurs 402 sont montés en étoile, avec des écartements angulaires de 120 degrés entre les amortisseurs. Des extrémités supérieures des amortisseurs 402 sont fixées à la tige d'axe 400 à l'aide de boulons d'assemblage 4020 vissés sur une portion supérieure du cardan 401 solidaire de la tige d'axe 400. L'extrémité supérieure d'un amortisseur 402 est maintenue fermement entre une tête et un écrou du boulon 4020 correspondant. Des extrémités inférieures des amortisseurs 402 sont fixées à la tige d'axe 400' à l'aide de boulons d'assemblage 4021 vissés sur une bague d'assemblage 4022 passée dans la tige d'axe 400'. Les extrémités filetées des boulons 4021 traversent des orifices filetés de la bague 4022 et un serrage est effectué de telle manière que la tige d'axe 400', la bague d'assemblage 4022 et les boulons 4021 sont assemblés solidairement. L'extrémité inférieure d'un amortisseur 402 est maintenue fermement entre une tête et un écrou du boulon 4021 correspondant.

Le boîtier électronique 41 est relié mécaniquement de manière fixe à la tige d'axe 400'. Le boîtier 41 contient une source d'alimentation comprenant un ou plusieurs accumulateurs électriques, et l'ensemble de l'électronique nécessaire au fonctionnement de l'aérostat 2. Les composants et circuits électroniques nécessaires, bien connus des hommes du métier, ne seront pas détaillés ici. Le boîtier 41 est fixé sur une partie supérieure horizontale 420 du cadre en U 42.

Le cadre en U 42 comprend deux branches verticales 421 et 422 s'étendant vers le bas à partir de la partie supérieure horizontale 420. De préférence, le cadre en U 42 est constitué d'un corps creux dans lequel sont logés un servomoteur et une connectique adéquate (non représentés).

Le boîtier de capteur 43 est monté entre les deux branches verticales 421 et 422 du cadre en U 42. Le servomoteur mentionné ci-dessus est logé dans l'une des branches verticales 421, 422, du cadre 42. Le fonctionnement du servomoteur est télécommandé depuis le sol par l'opérateur afin de provoquer une rotation du boîtier de capteur 43 autour d'un axe horizontal 430.

Dans cette forme de réalisation, le boîtier 43 inclus un capteur de mesure 431. Dans une autre forme de réalisation, un appareil photographique, et une caméra miniature montée dans la visée dans celui-ci, sont installés à la place du capteur 431.

Les systèmes d'aérostat captif selon l'invention trouvent de nombreuses applications. Dans une application pour les secours aux personnes, l'invention peut être utilisée pour transmettre des images vidéo d'une personne en détresse (par exemple, un alpiniste sur une paroi rocheuse) afin par exemple de mieux juger de son état physique, ou comme moyens de transport pour faire parvenir à la personne des objets, de la nourriture, des médicaments, etc.. L'invention peut également être utilisée pour la signalisation et l'éclairage. Ces applications ne seront pas décrites ici en détail car elles font appel à des moyens connus aisément intégrables, compte-tenu de la description ci-dessus.

Par ailleurs, il apparaîtra de manière évidente aux hommes du métier que la console de commande 1 inclut dans le système d'aérostat captif selon l'invention peut aisément être adaptée pour le pilotage de cerfs-volants. Les deux amarres sont utilisées pour relier le cerf-volant à la console de commande, et la console est simplifiée en supprimant des composants mécaniques, électriques et électroniques superflus. Dans la présente demande, il conviendra donc d'interpréter le terme "aérostat" de manière très large.

Les principes de l'invention étant ici divulgués, différentes autres modifications et variantes seront apportées par les hommes du métier. Ces modifications et variantes devront être considérées comme incluses dans le champ d'application de l'invention, lequel n'est nullement limité aux formes de réalisation actuellement préférées telles qu'elles ont été décrites ci-dessus.

## Revendications

1. Système d'aérostat captif comprenant un aérostat (2) et un équipement de commande (1) situé au sol, et des première et seconde amarres (3a, 3b) reliant ledit aérostat (2) audit équipement de commande au sol (1), ledit aérostat (2) comprenant des premier et second moyens de stabilisation (210a, 210b) reliés en des premières extrémités à une nacelle (21) de l'aérostat (2) et couplés en des secondes extrémités auxdites première et seconde amarres (3a, 3b) pour stabiliser des mouvements de l'aérostat (2), et ledit équipement de commande (1) étant porté par un opérateur et étant conçu ergonomiquement de telle manière que ledit opérateur peut commander le système d'aérostat captif tout en se déplaçant.

2. Système d'aérostat captif selon la revendication 1, dans lequel lesdits premier et second moyens de stabilisation sont constitués par des tiges (210a, 210b) formant entre elles un angle compris entre 100 et 120 degrés environ.

3. Système d'aérostat captif selon la revendication 1 ou 2, comprenant des moyens de commande à treuil motorisé (103a, 130a, 103b, 130b) logés dans ledit équipement de commande (1) pour commander une montée ou une descente dudit aérostat (2) en augmentant ou en réduisant une longueur desdites première et seconde amarres (3a, 3b).

4. Système d'aérostat captif selon la revendication 3, dans lequel lesdits moyens de commande à treuil motorisé (103a, 130a, 103b, 130b) comprennent des moyens de commande à vitesse variable (100, 103a, 103b) pour commander à vitesse variable ladite montée ou ladite descente dudit aérostat (2).

5. Système d'aérostat captif selon la revendication 3 ou 4, dans lequel lesdits moyens de commande à treuil motorisé (103a, 130a, 103b, 130b) comprennent des premier et second treuils (130a, 130b) actionnés respectivement par des premier et second moteurs électriques (103a, 103b), lesdits premier et second treuils (130a, 130b) étant associés respectivement auxdites première et seconde amarres (3a, 3b).

6. Système d'aérostat captif selon l'une quelconque des revendications 1 à 5, dans lequel ledit équipement de commande au sol (1) comprend des premier et second moyens mécaniques articulés (14a, 14b) associés respectivement auxdites première et seconde amarres (3a, 3b) pour réduire par une ou des actions mécaniques exercées par l'opérateur une ou des longueurs relatives desdites première et seconde amarres (3a, 3b) afin d'induire un ou des déplacements dudit aérostat (2).

7. Système d'aérostat captif selon la revendication 6, dans lequel lesdits premier et second moyens mécaniques articulés (14a, 14b) comprennent deux poignées indépendantes (14a, 14b) montées sur pivot à des extrémités avant dudit équipement de commande au sol (1) et disposées ergonomiquement de telle manière qu'elles se trouvent à portée naturelle des mains dudit opérateur et peuvent être basculées en rotation indépendamment par celui-ci afin de réduire lesdites une ou des longueurs relatives desdites première et seconde amarres (3a, 3b) de façon à induire lesdits un ou des déplacements dudit aérostat (2).

8. Système d'aérostat captif selon l'une quelconque des revendications 1 à 7, dans lequel ledit aérostat (2) comprend des moyens de stabilisation de charge (40) pour stabiliser sur un axe vertical une charge (4) embarquée dans l'aérostat (2) en amortissant des mouvements et oscillations appliqués à ladite charge (4).

9. Système d'aérostat captif selon la revendication 8, dans lequel lesdits moyens de stabilisation de charge (40) comprennent trois amortisseurs (402) montés en étoile sur deux axes verticaux (400, 400') couplés par cardan et portant ladite charge (4) en une extrémité inférieure.

10. Système d'aérostat captif selon la revendication 8 ou 9, dans lequel ledit aérostat (2) comprend des moyens télécommandés (213, 41, 43, 431) depuis le sol par ledit opérateur pour commander des rotations de ladite charge autour de différents axes, et notamment autour d'un axe vertical et d'un axe horizontal.

11. Système d'aérostat captif selon l'une quelconque des revendications 1 à 10, comprenant des moyens de communication bidirectionnelle (5) pour permettre des échanges d'informations entre ledit équipement de commande au sol (1) et ledit aérostat (2), et notamment des informations de télécommande et/ou des informations vidéo.

12. Système d'aérostat captif selon l'une quelconque des revendications 1 à 11, dans lequel ledit équipement de commande au sol (1) comprend des moyens de visualisation d'informations (15), incluant notamment un écran (151), pour visualiser des informations envoyées par ledit aérostat (2) et/ou pour visualiser des informations relatives au fonctionnement du système d'aérostat captif.

13. Système d'aérostat captif selon l'une quelconque des revendications 1 à 12, dans lequel ledit aérostat (2) comprend des moyens (431) destinés à la mesure et/ou à la prise de vue et/ou à la publicité et/ou aux secours et/ou à la signalisation.

14. Système d'aérostat captif selon la revendication 13, dans lequel lesdits moyens (431) destinés à la prise de vue comprennent un appareil photographique et une caméra vidéo miniature montée dans la visée dudit appareil photographique.

15. Système d'aérostat captif selon l'une quelconque des revendications 1 à 14, dans lequel ledit aérostat (2) est de type ballon sphérique.

## Claims

1. Captive aerostat system comprising an aerostat (2) and control equipment (1) which is situated on the ground, and first and second mooring ropes (3a, 3b) which connect the said aerostat (2) to the said control equipment on the ground (1), the said aerostat (2) comprising first and second means for stabilisation (210a, 210b) which are connected at first ends to a pod (21) of the aerostat (2) and are coupled at second ends to the said first and second mooring ropes (3a, 3b) in order to stabilise the movements of the aerostat (2), and the said control equipment (1) being carried by an operator and being designed ergonomically such that the said operator can control the captive aerostat system whilst he is moving.

2. Captive aerostat system according to claim 1, wherein the said first and second means for stabilisation consist of rods (210a, 210b) which form between one another an angle of between approximately 100 and 120 degrees.

3. Captive aerostat system according to claim 1 or claim 2, comprising motorised winch control means (103a, 130a, 103b, 130b) which are accommodated in the said control equipment (1) in order to command rising or descent of the said aerostat (2) by increasing or reducing a length of the said first and second mooring ropes (3a, 3b).

4. Captive aerostat system according to claim 3, wherein the said motorised winch control means (103a, 130a, 103b, 130b) comprise variable speed control means (100, 103a, 103b) in order to command the said rising or the said descent of the said aerostat (2) at variable speed.

5. Captive aerostat system according to claim 3 or claim 4, wherein the said motorised winch control means (103a, 130a, 103b, 130b) comprise first and second winches (130a, 130b) which are activated respectively by first and second electric motors (103a, 103b), the said first and second winches (130a, 130b) being associated respectively with the said first and second mooring ropes (3a, 3b).

6. Captive aerostat system according to any one of claims 1 to 5, wherein the said control equipment on the ground (1) comprises first and second articulated mechanical means (14a, 14b) which are associated respectively with the said first and second mooring ropes (3a, 3b) in order to reduce by means of one or more mechanical actions exerted by the. operator one or more relative lengths of the said first and second mooring ropes (3a, 3b) in order to induce one or more displacements of the said aerostat (2).

7. Captive aerostat system according to claim 6, wherein the said first and second articulated mechanical means (14a, 14b) comprise two independent handles (14a, 14b) which are fitted such as to pivot at front ends of the said control equipment on the ground (1) and are disposed ergonomically such that they are within the natural reach of the hands of the said operator, and can be pivoted in rotation independently by the latter, in order to reduce the said one or more relative lengths of the said first and second mooring ropes (3a, 3b) such as to induce the said one or more displacements of the said aerostat (2).

8. Captive aerostat system according to any one of claims 1 to 7, wherein the said aerostat (2) comprises means for stabilisation of load (40) in order to stabilise on a vertical axis a load (4) embarked in the aerostat (2), by deadening the movements and oscillations applied to the said load (4).

9. Captive aerostat system according to claim 8, wherein the said means for stabilisation of load (40) comprise three shock absorbers (402) which are fitted in star form on two vertical shafts (400, 400') which are coupled by means of a universal joint and support the said load (4) at a lower end.

10. Captive aerostat system according to claim 8 or claim 9, wherein the said aerostat (2) comprises means (213, 41, 43, 431) which are controlled remotely from the ground by the said operator in order to command rotations of the said load around different axes, and in particular around a vertical axis and a horizontal axis.

11. Captive aerostat system according to any one of claims 1 to 10, comprising two-way means for communication (5), in order to permit exchanges of information between the said control equipment on the ground (1) and the said aerostat (2), and in particular remote control information and/or video information.

12. Captive aerostat system according to any one of claims 1 to 11, wherein the said control equipment on the ground (1) comprises means for displaying information (15), including in particular a screen (151), in order to display information transmitted by the said aerostat (2) and/or in order to display information relating to the functioning of the captive aerostat system.

13. Captive aerostat system according to any one of claims 1 to 12, wherein the said aerostat (2) comprises means (431) which are designed for measuring and/or taking shots and/or advertising and/or rescue and/or signalling.

14. Captive aerostat system according to claim 13, wherein the said means (431) which are designed for taking shots comprise a camera and a miniature video camera fitted in the viewfinder of the said camera.

15. Captive aerostat system according to any one of claims 1 to 14, wherein the said aerostat (2) is of the spherical balloon type.

## Patentansprüche

1. Fesselballonsystem umfassend einen Luftballon (2) und eine am Boden befindliche Bedienungseinrichtung (1), sowie den Luftballon (2) mit der Bedienungseinrichtung am Boden (1) verbindende erste und zweite Halteleinen (3a, 3b), wobei der Luftballon (2) erste und zweite Mittel zur Stabilisierung (210a, 210b) umfasst, die an ersten Enden mit einer Gondel (21) des Luftballons (2) verbunden und an zweiten Enden mit den ersten und zweiten Halteleinen (3a, 3b) verbunden sind, um Bewegungen des Luftballons (2) zu stabilisieren, und die Bedienungseinrichtung (1) von einem Bediener getragen wird und derart ergonomisch entwickelt ist, dass der Bediener das Fesselballonsystem im Gehen steuern kann.

2. Fesselballonsystem gemäß Anspruch 1, in dem die ersten und zweiten Mittel zur Stabilisierung aus Gestängen (210a, 210b) gebildet sind, die zwischen sich einen Winkel zwischen ungefähr 100 und 120 Grad einschließen.

3. Fesselballonsystem gemäß Anspruch 1 oder 2, umfassend in die Bedienungseinrichtung (1) eingebaute Mittel zur Steuerung mit Motorwinde (103a, 130a, 103b, 130b), um einen Aufstieg oder einen Abstieg des Luftballons (2) durch Vergrößern oder Verkleinern einer Länge der ersten und zweiten Halteleinen (3a, 3b) zu steuern.

4. Fesselballonsystem gemäß Anspruch 3, in dem die Mittel zur Steuerung mit Motorwinde (103a, 130a, 103b, 130b) Mittel zur Steuerung mit variabler Geschwindigkeit (100, 103a, 103b) umfassen, um mit variabler Geschwindigkeit den Aufstieg oder den Abstieg des Luftballons (2) zu steuern.

5. Fesselballonsystem gemäß Anspruch 3 oder 4, in dem die Mittel zur Steuerung mit Motorwinde (103a, 130a, 103b, 130b) erste und zweite Winden (130a, 130b) umfassen, die jeweils durch erste und zweite Elektromotoren (103a, 103b) angetrieben werden, wobei die ersten und zweiten Winden (130a, 130b) jeweils mit den ersten und zweiten Halteleinen (3a, 3b) verbunden sind.

6. Fesselballonsystem gemäß irgendeinem der Ansprüche 1 bis 5, in dem die Bedienungseinrichtung am Boden (1) erste und zweite mechanische gelenkige Mittel (14a, 14b) umfasst, die jeweils mit den ersten und zweiten Halteleinen (3a, 3b) verbunden sind, um durch eine oder mehrere vom Bediener ausgeführte mechanische Einwirkungen eine oder mehrere relative Längen der ersten und zweiten Halteleinen (3a, 3b) zu verkleinern, um eine oder mehrere Bewegungen des Luftballons (2) zu bewirken.

7. Fesselballonsystem gemäß Anspruch 6, in dem die ersten und zweiten mechanischen gelenkigen Mittel (14a, 14b) zwei unabhängige Griffe (14a, 14b) umfassen, die an Enden vor der Bedienungseinrichtung am Boden (1) auf Zapfen montiert und derart ergonomisch angeordnet sind, dass sie sich in natürlicher Reichweite der Hände des Bedieners befinden und von diesem unabhängig voneinander in Rotation gekippt werden können, um eine oder mehrere relative Längen der ersten und zweiten Halteleinen (3a, 3b) zu verkleinern, und somit eine oder mehrere Bewegungen des Luftballons (2) zu bewirken.

8. Fesselballonsystem gemäß irgendeinem der Ansprüche 1 bis 7, in dem der Luftballon (2) Mittel zur Laststabilisierung (40) umfasst, um auf einer vertikalen Achse eine vom Luftballon (2) getragene Last (4) zu stabilisieren, indem auf die Last (4) angewendete Bewegungen und Schwingungen gedämpft werden.

9. Fesselballonsystem gemäß Anspruch 8, in dem die Mittel zur Laststabilisierung (40) drei sternförmig auf zwei vertikalen Achsen (400, 400') montierte Dämpfer (402) umfassen, die kardanisch gekoppelt sind und an einem unteren Ende die Last (4) tragen.

10. Fesselballonsystem gemäß Anspruch 8 oder 9, in dem der Luftballon (2) durch den Bediener vom Boden aus fernbediente Mittel (213, 41, 43, 431) umfasst, um Rotationen der Last um verschiedene Achsen zu steuern, vor allem um eine vertikale Achse und eine horizontale Achse.

11. Fesselballonsystem gemäß irgendeinem der Ansprüche 1 bis 10, umfassend Mittel zum Informationsfluss (5) in beiden Richtungen, um einen Informationsaustausch zwischen der Bedienungseinrichtung am Boden (1) und dem Luftballon (2) zu ermöglichen, vor allem Fernbedienungs- und/oder Videoinformationen.

12. Fesselballonsystem gemäß irgendeinem der Ansprüche 1 bis 11, in dem die Bedienungseinrichtung am Boden (1) Mittel zur Anzeige von Informationen (15) umfasst, die besonders einen Bildschirm (151) einschließen, um durch den Luftballon (2) gesendete Informationen anzuzeigen und/oder um Informationen bezüglich des Betriebs des Fesselballonsystems anzuzeigen.

13. Fesselballonsystem gemäß irgendeinem der Ansprüche 1 bis 12, in dem der Luftballon (2) Mittel (431) umfasst, die für Messungen und/oder Bildaufnahmen und/oder Werbung und/oder Hilfsaktionen und/oder zur Nachrichtenübermittlung bestimmt sind.

14. Fesselballonsystem gemäß Anspruch 13, in dem die für Bildaufnahmen bestimmten Mittel (431) einen Fotoapparat und eine Miniatur-Videokamera umfassen, die in den Sucher des Fotoapparates montiert ist.

15. Fesselballonsystem gemäß irgendeinem der Ansprüche 1 bis 14, in dem der Luftballon (2) vom Typ eines Kugelballons ist.
